# EUROPEAN PATENT APPLICATION

(11) **EP 3 384 764 A1**
(43) Date of publication of application: **10.10.2018**
(21) Application number: 18165504.4
(22) Date of filing: 03.04.2018
(51) Int. Cl.: A01K 1/02, A45C 13/22, A45C 13/26

(54) **HANDLE FOR CUMBERSOME OBJECTS, IN PARTICULAR FOR PET CARRIERS**

(30) Priority: 06.04.2017 IT 201700038181 U
(71) Applicant: MPS 2 SRL, 36051 Creazzo (VI) (IT)
(72) Inventor: TAMIOZZO, Giovanni Battista, 36050 Vicenza (IT)
(74) Representative: Bettello, Pietro

(57) **Abstract**

A handle for cumbersome objects is involved, in particular for pet carriers, of the type composed of a handle (2) connected to the object to be lifted. Said handle (2) is characterized in that it provides, at its own ends (3, 4), a pair of slot-shaped elements (5, 5' and 6, 6'), a pair of pins (7, 8) belonging to a pair of components (9) being adapted to be introduced into the aforesaid pair of slot-shaped elements (5, 5' and 6, 6'), each of such components (9) being connected to a pair of arms (11) which, at the opposite end (13) thereof, in turn is connected to a couple of elements (15, 16) that ends with a curve-shaped portion (17, 18), said portions being adapted to be coupled to pins fastened to the object to be lifted and transported.

## Description

The present finding relates to a handle for cumbersome objects, in particular for pet carriers, according to the general part of claim 1.

It is known that very often there is the need to transport cumbersome objects and, in order to do this, are commonly used handles which allow performing such transport substantially with the use of a single hand. Even if they are not particularly heavy, these cumbersome objects would be difficult and inconvenient to transport when carried in a person's arms.

A typical example of such objects is represented by the regular travel luggage, which is frequently provided with a handle for the transport thereof, even if over the last few years it is preferred to drag suitcases with an extendible handle or the like, since they are usually provided with wheels on the lower surface thereof.

Among the various objects which have to be transported, pet carriers are increasingly common, in particular for dogs, cats, rabbits and any kind of companion animals. Pet carriers generally consist of a pair of half-shells of substantially identical shape and sizes, which once mutually coupled, form a closed structure; in any case there is always a door, grating or the like, which is opened and closed by the user to allow the introduction and/or removal of the animal from the carrier, according to needs.

These devices are always provided with handles because, also in case they are structured to contain small animals, they are rather cumbersome anyway and therefore very difficult to transport by holding them in one's arms or the like.

In cheap pet carriers the handle is simply integral with the upper surface of the carrier and since the two half-shells are generally made of plastic by moulding, such fixed handle is usually made directly at the time of moulding itself.

Such a construction solution is particularly affordable and easy to manufacture, but it results in the serious drawback that it is impossible to stack a plurality of carriers one on top of the other. The difficulty of stacking results in problems during the shipping of the aforesaid carriers for the dealers, and also storing problems for the users, in the event they have a plurality of such devices to be put away when they are not used.

Moreover, precisely because such handles in this case are obtained by moulding, they are intrinsically fragile and therefore are subject to breaking with certain ease, which in practical terms, results in the carrier no longer being usable.

Other types of carriers provide that such handles are fastened to the upper surface of the carrier by means of pins and the like.

In particular, carriers are provided with a grip that is connected to the carrier by means of hinge means, eyelet means or the like, which allow a certain freedom of movement of the handle with respect to the object to which it is fastened.

In practice, this construction arrangement is used by the field of handbags, luggage and the like, where it is particularly used and allows keeping the handle "lowered" when it is not being used, by resting it as close as possible on the surface of the carrier to which it is fastened, when the aforesaid carrier is not used.

However, the handle also in this case is intended to protrude from said surface also when the carrier is not used, which results in, although to a lesser extent, all the problems disclosed above.

Object of the present model is to realize a handle for cumbersome objects, in particular for pet carriers, which can be easily and excellently catchable during the use, but which may be rested on the surface of the carrier to which it is fastened in a better way with respect to similar handles of the known type.

According to the invention, this is obtained by configuring such handle according to the characteristics of the characterizing part of claim 1.

These and other characteristics of the model are described in detail below, with reference to a particular embodiment thereof, made by way of a non-limiting example, with the aid of the accompanying drawings, where:
- figures 1, 2, and 3 respectively show a perspective view, a top plan view and a side view of the handle of the model in the position corresponding to the actual use of the aforesaid;
- figures 4, 5, and 6 respectively show a perspective view, a side view and a front view of the animal carrier to which the handle of the model is applied, in the condition of actual use of the aforesaid;

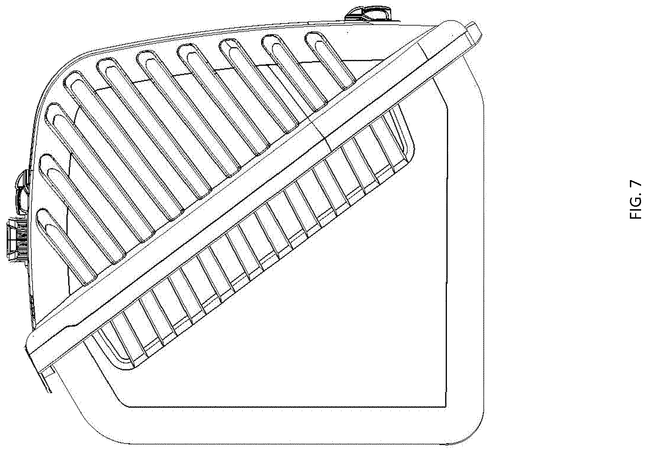

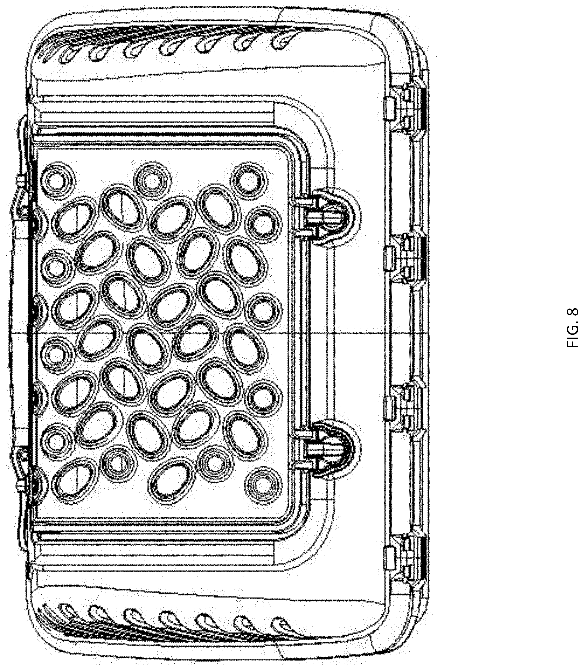

- figures 7 and 8 show, respectively, views corresponding to figures 5 and 6 of the carrier with the handle arranged in the position closest to the surface to which it is fastened, when it is not used.

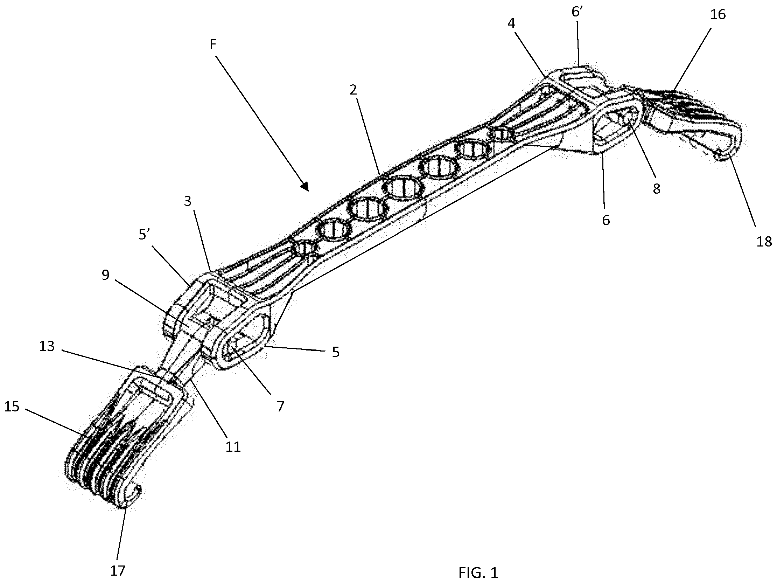

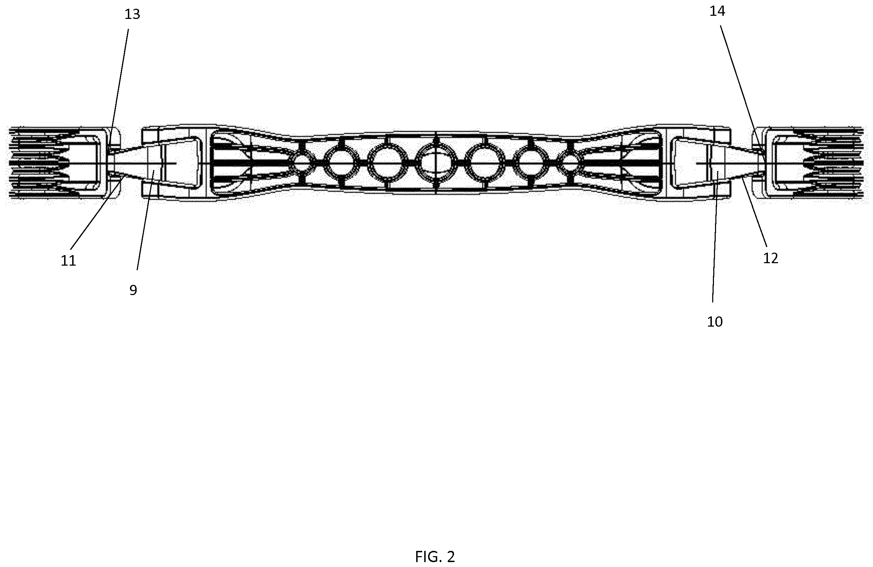

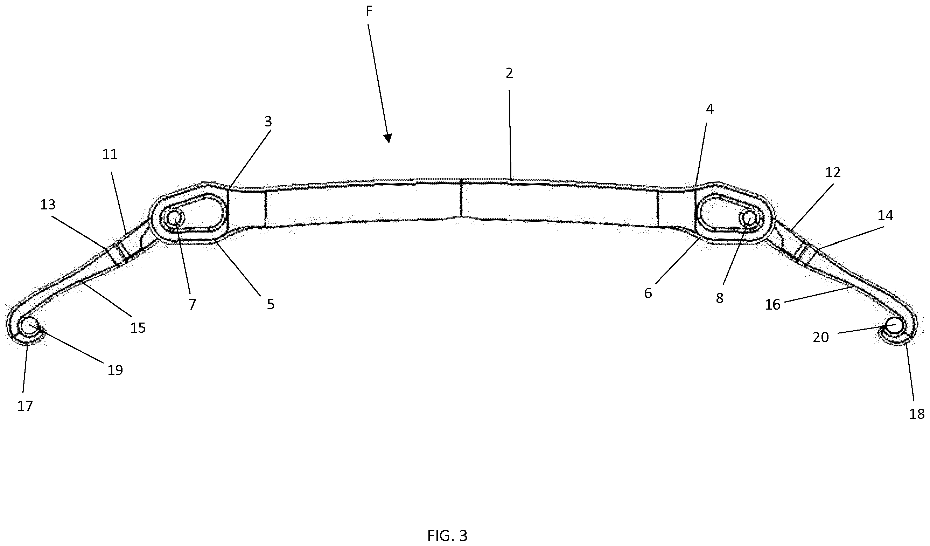

Figures 1, 2 and 3 show how the handle of the model has a handle 2 which is to be connected to the object to be lifted, advantageously consisting, in this case, of a pet carrier 1, shown in figures from 4 to 8. Such handle has, at the ends 3, 4 of the handle 2, a pair of slot-shaped elements 5, 5' (in correspondence of the end 3) and 6, 6' (in correspondence of the end 4). A pair of pins, respectively 7 and 8, belonging to a a pair of components 9, 10 is adapted to be introduced into said slot elements 5, 5' and 6, 6'. Each of such components 9, 10 is connected by means of an arm, respectively 11, 12, which at the opposite end thereof 13, 14, is connected to an element 15, 16 which ends with a curve-shaped portion 17, 18, as shown in particular in fig. 3. Said portions are adapted to be coupled to the pins 19, 20 (fig. 3) fastened to the object to be lifted and transported, here advantageously, as already mentioned above, consisting of a pet carrier 1.

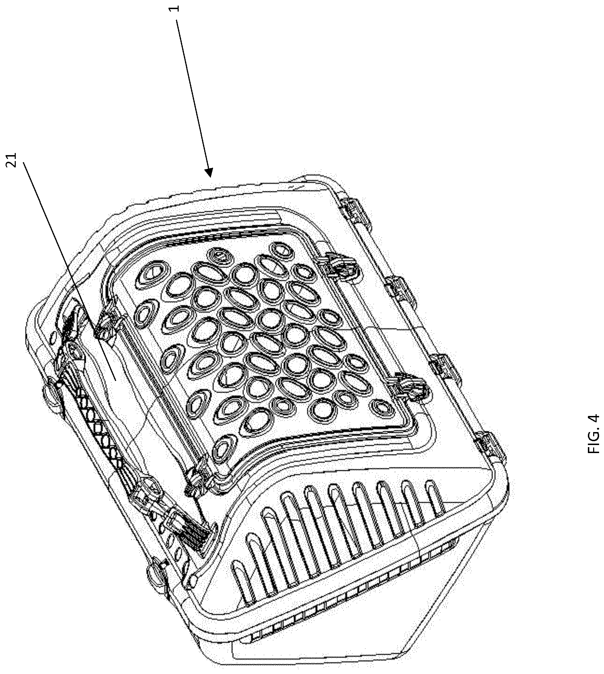

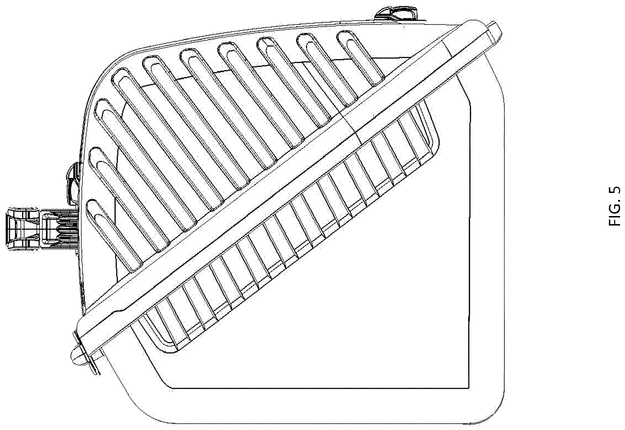

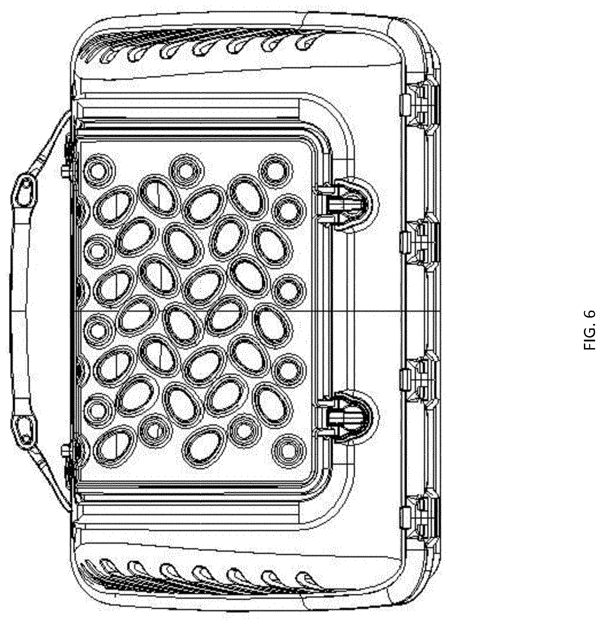

In practical terms, the operation of the handle is particularly simple and effective. In practice, when the user grasps the handle 2 with a hand to lift the carrier 1, the pins 7, 8 are in the positions shown in figures 1 and 3, and also in figures 4 to 6 relative to the whole carrier. This obviously is due to the fact that the pins 7 and 8 move within the pair of slot-shaped elements 5, 5' and also 6, 6', and are necessarily positioned at the lower portions of said slots. Vice versa, when the carrier is not used, it is possible to lower the grip of the handle 2 by means of a simple and small push according to the arrow "F" in figures 1 and 3, so as to allow the pins 7 and 8 to be arranged at the upper portions of the pair of slot-shaped elements 5, 5' and also 6, 6'.

Thereby, the handle 2 has necessarily the possibility of being lowered, coming into contact with the surface of the carrier or in any case with the device to be lifted, in correspondence with which there are the pins 19, 20 that induce the connection of the handle to the object itself.

As shown in particular in figure 4, it is possible to ensure that on the object to be transported, here consisting of the carrier 1, below the area where the handle is, there is a track 21 of shape and sizes corresponding to the handle when it is in the lowered condition at such object, to allow a further lowering of the handle.

It is apparent from that above how it is possible to achieve the objects predefined above by means of the device of the model, and this due to the fact that with a particularly simple constructive method, both in constructional and functional terms, it is possible to have available a handle adapted to transport a liftable object with respect to the object itself only during the use but which may be lowered arranging it against one of the surfaces of the object itself when it is not used, thus reducing the overall volume of the object with handle and also allowing a plurality of these objects provided with handle to be arranged in a stack.

## Claims

1. HANDLE FOR CUMBERSOME OBJECTS, IN PARTICULAR FOR PET CARRIERS, of the type composed of a handle (2) connected to the object to be lifted, said handle (2) **being characterized in that** it provides, at its two own ends (3, 4), a pair of slot-shaped elements (5, 5' and 6, 6'), a pair of pins (7, 8) belonging to a pair of components (9, 10) being adapted to be introduced into the aforesaid pair of elements (5, 5' and 6, 6'), each of such components (9, 10) being connected to a pair of corresponding arms (11, 12) which, at the opposite corresponding end (13, 14) thereof, is in turn connected to a pair of corresponding elements (15, 16) that ends with curve-shaped portions (17, 18), said portions (17, 18) being adapted to couple to a pair of pins (19, 20) fastened to the object to be lifted and transported.
